# EUROPEAN PATENT SPECIFICATION

(11) **EP 2 604 154 B1**
(45) Date of publication and mention of the grant of the patent: **02.12.2015**
(21) Application number: 12008089.0
(22) Date of filing: 04.12.2012
(51) Int. Cl.: A47J 31/56, A47J 31/60, B01D 35/143, C02F 1/00

(54) **METHOD FOR DETERMINING THE FILTER WEAR IN A FILTERING DEVICE FOR FILTERING LIQUIDS**
VERFAHREN ZUR BESTIMMUNG DES FILTERVERSCHLEIßES IN EINER FILTERVORRICHTUNG ZUM FILTERN VON FLÜSSIGKEITEN
PROCÉDÉ DE DÉTERMINATION DE L'USURE DE FILTRE DANS UN DISPOSITIF DE FILTRATION POUR FILTRER DES LIQUIDES

(30) Priority: 18.12.2011 IT MI20112299
(43) Date of publication of application: 19.06.2013
(73) Proprietor: Tenacta Group S.p.A., 24052 Azzano S. Paolo (BG) (IT)
(72) Inventor: Alborghetti, Luciano, 24052 Azzano San Paolo (BG) (IT); Barbieri, Gabriele, 24052 Azzano San Paolo (BG) (IT); Aguti, Alberto, 24052 Azzano San Paolo (BG) (IT); Morgandi, Arturo, 24052 Azzano San Paolo (BG) (IT)
(74) Representative: Contessini, Pier Carlo

(56) References cited:
- WO-A1-03/084875
- WO-A2-2006/067618
- DE-A1-102006 037 364
- US-A1- 2005 224 422

## Description

### Field of invention

The present invention refers to a method for determining the filter wear in a filtering device for filtering liquids which comprises a filter and means for identifying the filter wear.

In particular, the present invention uses a jug for filtering the water dispensed from the taps.

### State of the art.

To date there are on the market jugs, or other similar containers, provided with removable filters based on activated carbon or other known materials for water filtration. When the filter reaches such a wear level not allowing it to act anymore as a filtering agent, it is necessary to replace this with a new filter to start a new filtration cycle.

There are various devices allowing to determine when the appropriate time for replacing the filter has come; such known in the art devices are based on various parameters, such as the amount of filtered water liters, the elapsed time from when a new filter has been inserted, the water quality or combination of some of such parameters.

For example, the international patent application published as WO 2005/097293 describes a device that, in order to calculate when the filter terminates its function, measures the amount of water that is filtered through the use of floats, while the international patent applications published as WO 2009/012832 and WO 2005/085139 use a capacitive sensor and a motion sensor, respectively, for the same purpose. However it has been noted that a more important parameter to determine the filter wear is not the volume of filtered water, but rather the elapsed time since the filter has been activated. Generally, at the time when a new filter is inserted into the jug, the user activates a time counting means by pressing an appropriate button and from that moment the time is counted.

For example, the patent application EP 955268-A describes a jug having a lid, in an opening of which a non-removable device is fixed, activated by a battery circuit, which only indicates the amount of elapsed time since said device has been activated, in conjunction with the filter insertion into the jug, without co-operating with other devices separated from it that detect and transmit signals related to the filter wear.

The patent applications DE 10143884 and GB 2469623 describe jugs provided with time counting means and with a motion sensor which detects the jug inclination; this way the actual time from which it is possible to calculate the filter wear is detected. Other solutions, such as those described, for example, in patent application EP 891952-A or in the international patent application published as WO 0066245-A, provide for the use of both a means to count the elapsed time since a new filter has been inserted into the jug, and the liter amount of filtered water. However, this information is provided using devices, such as magnets or other devices detached from the main circuit, thereby making the product complex and expensive.

In addition, the patent application EP 1484097-A verifies the water quality (electrical conductivity) in order to have an additional parameter to calculate the filter life, in addition to the two known parameters which are used to calculate the filter life, which are time and amount of filtered water. To check the water quality, in that patent application the impedance measurement is used, which, however, in practice has the disadvantage of being an indirect and not always accurate measuring method. To improve such impedance measurement, a preferred exemplified aspect in such patent

The international patent application published as WO 2010/142473 provides for the use of an audible signal to alert the user that it is time to replace the filter. In that application it is pointed out the fact that the filter exhausts due to various factors, such as the volume of filtered water, the time elapsed since its activation and the water temperature and/or hardness.

WO 2006/067618-AA1 discloses a device for detecting characteristics of a fluid, in particular lubricating oil, used on a vehicle having a hydraulic circuit that comprises at least one filtering member for the fluid, the filtering member being of the type that can be periodically replaced and housed for the purpose in a removable way within a chamber delimited by a casing. The temperature of the environment is monitored for determining the wear of the filter.

US 2005/224422-A1 discloses a method for determining the conditions of exhaustion of a filtering cartridge for filtering carafes with replaceable cartridges, wherein an initial identification of impedance of the water to be filtered is provided for in order to consequently calculate an important parameter for definition of the efficient lifespan on the filtering cartridge.

DE 102006037364-A1 discloses a sensor device which comprises a sensor element with a coding unit for transmitting coded information. In particular, the sensor element comprises an adjusting part which changes the damping and/or resistance of an electrical resonant circuit and the inductivity and/or capacitance of an oscillation circuit.

On the other hand the Applicant has found that the only measurement of the water temperature is not relevant for the purposes of calculating the filter wear. In fact, when the water is dispensed from the tap, it has a temperature that depends on many factors, such as the type of the water conduit used, the time elapsed since the last dispensing by the user for other purposes, etc... Thus, the water temperature measurement may be used only and exclusively to more accurately calculate the water impedance measurement in those systems implementing this strategy in order to calculate the residual filter life. The Applicant has also found that in none of the documents known in the art considering the elapsed time as the main parameter to determine the filter wear, a significant factor which is represented by the potential bacteria growth which may arise in filter with different times depending on the room temperature at which the filter is subjected after its insertion into the jug is also taken into account.

Therefore, the technical problem that the applicant has addressed is to avoid that an exhausted filter generate a bacterial proliferation than can move from the filter to the filtered water ready for drinking.

Therefore, the need remains to have a device which measures the filter duration in an effective way, associated to the time elapsed since the filter activation and to the bacterial proliferation the filter itself may be subject to.

### Summary of the Invention

The present invention refers to a method for determining the wear of the filter in a filtering device as detailed in claim 1.

The Applicant of the present application has in fact surprisingly found that a filtering device for liquid filtering comprising:
- an upper reservoir able to contain the liquid to be filtered and a lower reservoir able to contain the filtered liquid;
- at least a removable filter positioned to filter said liquid contained in said upper reservoir;
- means for detecting said filter wear,
characterized by the fact that:
said means for detecting the filter wear comprise at least a means for measuring the room temperature within which said filtering device is positioned,
is able to accurately determine the filter duration that is actually commensurate with the elapsed time from the filter use and with the bacterial proliferation associated to the room temperature.

This way, the filtering device used in the present invention comprises a simple and economical device, accurate at the same time, to check the wear of the filter contained in the filtering device.

In this context, "filtering device" means a filtering jug, a filtering bottle, a carbonating unit combined with a filtering system or other filtering systems, wherein a removable filter filters the drinking water by gravity.

Preferably, the filtering device used in the present invention is a jug for water filtering. More preferably, said removable filter is positioned so that said upper and lower reservoirs are brought into communication by means of said removable filter through which the water passes, by the gravity effect, from said upper reservoir to said lower reservoir.

This way, said lower reservoir is able to contain only the water that has passed through said removable filter.

Preferably, said means for measuring the room temperature is a temperature sensor; more preferably, it is a temperature sensor of the NTC (Negative Temperature Coefficient) type or an equivalent sensor of any other nature.

Preferably, said means for determining the filter wear further comprises means for counting the time relative to the residual filter life; more preferably, said means for counting the time comprise a microprocessor.

Preferably, said means for measuring the room temperature and said microprocessor are integrated into a single device.

Preferably, said means for measuring the room temperature is housed in a container placed at a lid positioned over said upper reservoir of the filtering device. More preferably, also said means for counting the time are housed in said container.

In a preferred embodiment, said container is able to separately accommodate therein said means for measuring the temperature and said means for counting the time.

In another preferred embodiment, said container is able to house therein a single device in which said means for measuring the temperature and said means for counting the time are integrated one to the other. This way a space reduction is obtained needed to house both said means for measuring the temperature and said means for counting the time.

Preferably, said means for counting the time also include a device to activate the counting of said elapsed time, preferably positioned in said container so as to be easily operated by the user.

Preferably, said counting means of the elapsed time is activated by means of a button able to be manually activated by the user, or even by mechanical or electronic means. Preferably, said means for counting the time also include a display device able of displaying the residual filter life time; more preferably, said display device is housed in said lid, so as to be easily visible by the user.

In one embodiment, said display device is able to display the filter wear by means of bars or graphic symbols or LEDs which are progressively turned on or turned off as the filter wear grows or that, similarly, the filter residual life decreases.

Preferably, said display device is also able to display the achievement of filter maximum wear, through the turning on of a particular light indicator. This way the user is informed at the time when the replacement of the filter with a new one becomes necessary.

In one embodiment, said means for measuring the room temperature measures the room temperature only at the activation of said elapsed time counting.

This way, according to the detected room temperature measurement wherein the filter is located at the time of activation of said counting, it is possible to pre-set a shorter or longer useful filter duration life, according to, respectively, the detected temperature is lower or higher.

For example, if the detected room temperature is not greater than 10 °C, it is possible to set the use maximum duration of said filter, for example at 35 days, which is the maximum recommended use for said liquid filters at low temperatures. Shorter duration of filter use may be set at, for example, 32, 30 and 28 days (the latter being generally considered the minimum duration of said liquid filter at high room temperatures), respectively if the detected temperature is between 11 and 15 °C, between 15 and 25 °C, and above 25 °C. Obviously, said filter use durations may be differently set through said means for counting the time, both for what concerns the day duration and the relationship between said duration and the measured room temperature.

In another embodiment, said means for measuring the room temperature measures the room temperature at regular intervals, e.g. every 30 or 60 minutes, after said counting of the elapsed time has been activated.

This way, according to the repeated measurements of the room temperature wherein the filter is located, it is possible to modify the counting speed of the filter residual life by said means for counting the time. In fact, it is possible to intervene on the means for counting the time by accelerating or decelerating its counting speed, to obtain more accurate information on the filter residual life which also takes in account a greater or lower bacterial proliferation. In fact, a room temperature increase wherein the filtering device is located corresponds to a bacterial proliferation increase and, consequently, a decrease in the useful filter life; in this case the speed which counts the filter residual life will be accelerated. Conversely, a room temperature decrease corresponds to a bacterial proliferation decrease and, consequently, to a useful filter life increase; in this case, the speed which counts the filter residual life will be slowed down.

For this reason it is preferable to advise the user (through the use instruction booklet) to store the jug with its filter, when not in use, directly in the refrigerator or in any environment where the room temperature is lower than the temperature usually present in homes, in order to reduce the bacterial proliferation and, therefore, to increase the useful filter life.

The Applicant of the present application has in fact surprisingly found that a method for determining the filter wear in a filtering device for filtering liquids comprising the steps of:
a) inserting a removable filter for filtering liquids in a filtering device;
b) detecting the room temperature wherein said filtering device is positioned;
c) setting the predetermined duration of the said filter useful life according to said temperature detection; and
d) activating the counting of the gradual decreasing of said filter useful life with time, is able to accurately detect the filter duration which is actually commensurate with the elapsed time from the filter use and with the bacterial proliferation associated to the room temperature.

This way, according to the detected room temperature measurement wherein the filter is located at the time of the counting activation, it is possible to set a longer or shorter predetermined duration of the useful filter life.

Preferably, the method of the present invention further comprises the additional steps of repeatedly detecting the room temperature at regular time intervals after said counting activation and, according to said repeated temperature measurements, update said counting speed, if necessary.

Preferably, said filtering device is as the one described above.

Preferably, said useful filter life is in the range between 28 and 35 days.

Preferably, said method for determining the filter wear in a filtering device comprises the further step of emitting a visual signal and/or an acoustic signal to advise the user about the filter wear level.

Further characteristics and advantages of the present invention will become more apparent from an examination of the following detailed description of a preferred embodiment, but not exclusive, illustrated by way of non limitative example, with the support of the accompanying drawings, wherein:
- Figure 1 is a side view of an embodiment of a jug used in the present application;
- Figure 2 is an enlarged view of a first embodiment of the means for determining the filter wear in the jug of Figure 1;
- Figure 3 is an enlarged view of a second embodiment of the means for determining the filter wear in the jug of Figure 1.

### Detailed Description.

The following detailed description refers to a particular embodiment of a jug used in the present invention, without limiting the content.

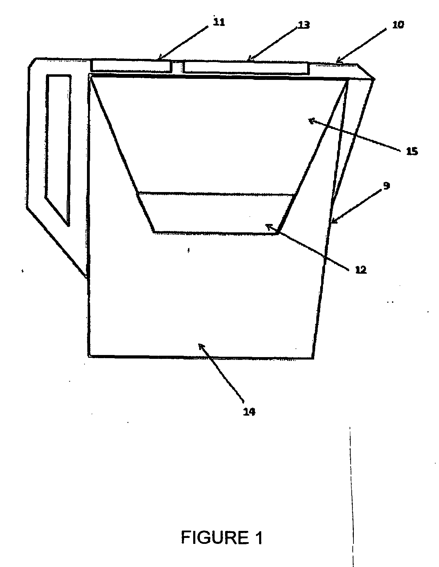

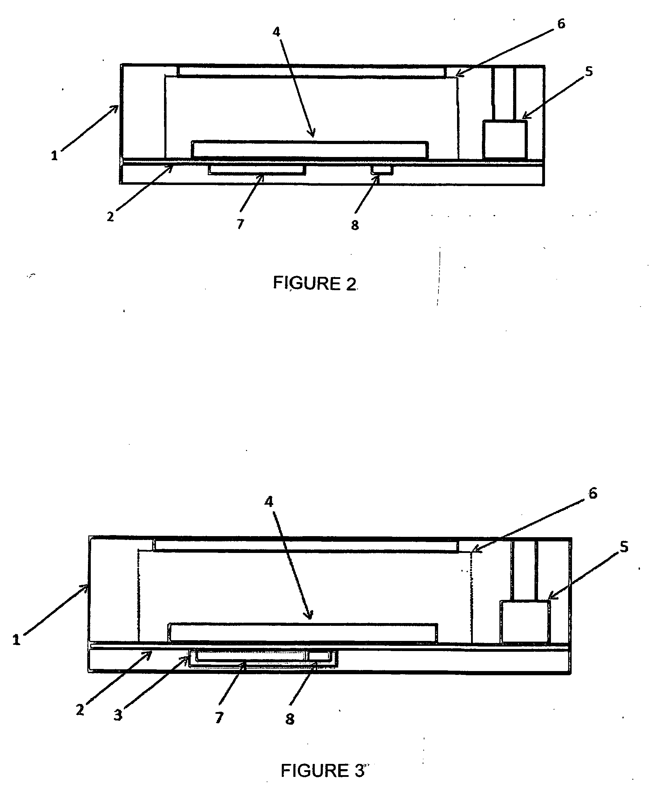

Referring to Figure 1, a jug 9 for filtering the water contained therein is described. In particular, in Figure 1 an upper reservoir 15 able to contain the water to be filtered, a lower reservoir 14 able to contain the filtered water, a lid 10 positioned, in a removable manner, over the upper reservoir 15 to close and protect the contents of the jug 9, and a filter 12 inserted in a removable manner for liquid filtering, positioned so that the water contained in the upper reservoir 15, before reaching the lower reservoir 14 by gravity, comes into contact with the filter 12, are visible. The filter 12 must be removed when the means for determining the wear of the filter 12 will give the relative indication. Inside the lid 10 is formed an opening 13 for the introduction of water and a housing 11 which contains a container 1 housing therein means for determining the wear of the filter 12, whose details are shown in expanded form in Figures 2 and 3.

In Figure 2 a first embodiment of the means for determining the wear of the filter 12 of the jug 9 used in the present invention is represented in detail wherein the means for determining the wear of the filter 12 comprise: a NTC (Negative Temperature Coefficient) type temperature sensor 8; a printed circuit board (PCB) type 2 connected to the temperature sensor 8; a liquid crystal display 6 to display the remaining filter life 12; a microprocessor 7 which performs the functions for the time counting and also for management of the display 6; a button 5 for pre-setting the maximum duration of usage of the filter 12; and a battery 4 to power various devices present in the container 1. In such a first embodiment, the microprocessor 7 for the time counting and the temperature sensor 8 are two separate devices.

Operatively, when the user inserts a new filter 12 in the jug 9 in the upper reservoir 15, the temperature sensor 8 measures the room temperature wherein the jug 9 is positioned and such temperature measurement is provided to the microprocessor 7, which according to such measurement, processes the predetermined duration of the filter 12 life. Such a predetermined duration will be the lower the higher the room temperature measured is, for example, if the temperature detected is not greater than 10 °C, the maximum duration of use for the filter 12 will be set at 35 days through the microprocessor 7; if the detected temperature is between 11 and 15 °C, the filter duration will be set at 32 days; if the detected temperature is between 15 and 25 °C, the filter duration will be set at 30 days, and if the detected temperature is higher than 25 °C, the filter duration will be set at a maximum of 28 days.

Optionally, the temperature sensor 8 can measure the room temperature also at regular intervals, e.g. every 30 minutes, after time counting has been activated. In this case, according to each new temperature value detected by the sensor 8, the microprocessor 7 can modify the time counting speed. In fact, in case a room temperature higher than the last detection is detected, a greater bacterial proliferation will be obtained in the environment and therefore a shorter duration of the filter 12; the microprocessor 7 will accelerate therefore the time counting speed, so as to reduce the life duration of the filter 12 itself, reaching so more rapidly the time when the filter 12 must be replaced with a new filter 12. Conversely, in case a room temperature lower than the last detection is detected, there will be lower bacterial proliferation in the filter and therefore a longer life of the filter 12 itself; the microprocessor 7 will reduce the time counting speed, so as to prolong the life duration of the filter 12 itself, reaching more slowly the time in which the filter 12 must be replaced with a new one.

As time goes by, the microprocessor 7 will turn on (or turn off) a series of bar indicating lights, allowing the user to understand, according to the number of bars that progressively turn on (or turn off) which is the wear state or the remaining life of the filter 12. When all the existing bars will be turned on (or turned off), the display device 6 then emits a visual signal that alerts the user that it is time to replace the filter 12, as it has reached the wear level beyond which it is believed that the filter 12 can no longer act in a suitable way.

Thus the user will remove the exhausted filter 12 currently in the jug 9 and replace it with a new one, repeating the above described steps.

In Figure 3 a second embodiment of the means for determining the wear of the filter 12 of the jug 9 of Figure 1 used in the present invention is represented in detail; the means for determining the wear of the filter 12 in Figure 3 differentiate from the same means of Figure 2 for the fact that in this second embodiment, the microprocessor 7 for the time counting and the temperature sensor 8, are integrated in a single device 3, for example the model MSP430G2231 available from Texas Instrument, while in Figure 2 two separate devices were present, that is one temperature sensor 8 and one microprocessor 7. In the embodiment of Figure 3 a considerable space saving in the container 1 positioned in the lid 10 of the jug 9 is obtained.

The present invention is not limited to the described preferred embodiments, illustrated only for exemplary purposes and not limitative, but is defined by the following claims.

## Claims

1. Method for determining the wear of the filter (12) in a filtering device (9) for liquid filtering comprising the steps of:
a) inserting a removable filter (12) for liquid filtering in a filtering device (9);
b) detecting the room temperature wherein said filtering device (9) is placed;
c) setting the predetermined duration of the said filter useful life (12) according to said detection of said room temperature;
d) activating the counting of the gradual decrease of said useful life of the filter (12) with time.

2. Method according to claim 1 which also comprises the further steps of repeatedly detecting the room temperature at regular intervals of time after the activation of said counting and, according to said repeated temperature detections, adjusting the speed of said counting.

3. Method according to claim 1 or 2 wherein said filtering device (9) for liquid filtering comprises:
- an upper reservoir (15) able to contain the liquid to be filtered and a lower reservoir (14) able to contain the filtered liquid;
- at least one removable filter (12) positioned to filter said liquid contained in said upper reservoir (15);
- means for detecting the wear of said filter (12),
wherein said means for detecting the wear of said filter (12) comprise at least means for measuring the room temperature (8) within which said filtering device (9) is positioned.

4. Method according to any claims 1 to 3 wherein said means for measuring the room temperature (8) is a temperature sensor (8).

5. Method according to any claims 1 to 4, wherein said means for determining the wear of said filter (12) further comprise means for counting the time related to the residual life of the filter itself (12).

6. Method according to claim 5, wherein said means for counting said time comprise a microprocessor (7).

7. Method according to claim 6, wherein said means for measuring the room temperature (8) and said microprocessor (7) are integrated into a single device (3).

8. Method according to any claims 3 to 7, wherein said means for measuring the room temperature (8) is housed in a container (1) placed in a lid (10) of said upper reservoir (15) of the filtering device (9).

9. Method according to any claims 3 to 8 wherein said filtering device (9) is a jug.

## Patentansprüche

1. Methode für die Bestimmung des Verschleißes des Filters (12) in einer Filtervorrichtung (9) für das Flüssigkeitsfiltern, die die folgenden Schritte umfasst:
a) Einfügen eines entfernbaren Filters (12) für das Flüssigkeitsfltern in eine Filtervorrichtung (9);
b) Erfassen der Raumtemperatur, innerhalb welcher besagte Filtervorrichtung (9) platziert ist;
c) Einstellen der vorbestimmten Dauer der besagten Nutzungsdauer des Filters (12) gemäß der besagten Erfassung der besagten Raumtemperatur;
d) Aktivierung der Zählung der schrittweisen Reduzierung der besagten Nutzungsdauer des Filters (12) im Laufe der Zeit;

2. Methode gemäß Anspruch 1, welche ebenso die weiteren Schritte der wiederholten Erfassung der Raumtemperatur in regelmäßigen Zeitabständen nach der Aktivierung der besagten Zählung und in Übereinstimmung mit den besagten wiederholten Temperaturerfassungen die Einstellung der Geschwindigkeit der besagten Zählung umfasst.

3. Methode gemäß Anspruch 1 oder 2, wobei besagte Filtervorrichtung (9) für das Flüssigkeitsfiltern Folgendes umfasst:
- einen oberen Sammelbehälter (15), der in der Lage ist, die zu filternde Flüssigkeit aufzunehmen und einen unterer Sammelbehälter (14), der in der Lage ist, die gefilterte Flüssigkeit aufzunehmen;
- wenigstens einen entfernbaren Filter (12), positioniert, um die besagte Flüssigkeit im besagtem oberen Sammelbehälter (15) zu filtern;
- Mittel, um den Verschleiß des besagten Filters (12) zu erfassen, wobei besagte Mittel für das Erfassen des Verschleißes des besagten Filters (12) wenigstens ein Mittel für das Messen der Raumtemperatur (8) umfasst, innerhalb welcher besagte Filtervorrichtung (9) platziert ist;

4. Methode gemäß einem der Ansprüche 1 bis 3, wobei besagtes Mittel für das Messen der Raumtemperatur (8) ein Temperatursensor ist (8).

5. Methode gemäß einem der Ansprüche 1 bis 4, wobei besagtes Mittel für das Erfassen von Verschleiß des besagten Filters (12) weiter Mittel für das Zählen der Zeit in Bezug auf die Restlebensdauer des Filters selbst (12) umfasst.

6. Methode gemäß Anspruch 5, wobei besagtes Mittel für das Zählen der besagten Zeit einen Mikroprozessor (7) umfasst.

7. Methode gemäß Anspruch 6, wobei besagtes Mittel für das Messen der Raumtemperatur (8) und besagter Mikroprozessor (7) in einem einzigen Gerät (3) integriert sind.

8. Methode gemäß einem der Ansprüche 3 bis 7, wobei besagtes Mittel für das Messen der Raumtemperatur (8) in einem Behälter (1)untergebracht ist, der in einem Deckel (10) des besagten oberen Sammelbehälters (15) der Filtervorrichtung (9) platziert ist.

9. Methode gemäß einem der Ansprüche 3 bis 8, wobei besagte Filtervorrichtung (9)eine Kanne ist.

## Revendications

1. Procédé de détermination de l'usure du filtre (12) dans un dispositif de filtrage (9) pour filtrer du liquide, comprenant les étapes consistant à:
a) l'insertion d'un filtre amovible (12) destiné à filtrer un liquide dans un dispositif de filtrage (9);
b) la détection de la température ambiante, où ledit dispositif de filtrage (9) est placé;
c) le réglage de la durée prédéterminée de la durée de vie utile dudit filtre (12) en fonction de ladite détection de ladite température ambiante;
d) activer le comptage de la diminution progressive de ladite durée de vie utile du filtre (12) avec le temps.

2. Procédé selon la revendication 1, qui comprend en outre les étapes supplémentaires consistant à détecter de façon répétée la température ambiante à des intervalles de temps réguliers après l'activation dudit comptage et, en fonction desdites détections répétées de la température, et le réglage de la vitesse dudit comptage.

3. Procédé selon les revendications 1 ou 2, où ledit dispositif de filtrage (9) pour le filtrage de liquide comprend:
- un réservoir supérieur (15) apte à contenir le liquide à filtrer et un réservoir inférieur (14) apte à contenir le liquide filtré;
- au moins un filtre amovible (12) positionné de façon à filtrer ledit liquide contenu dans ledit réservoir supérieur (15);
- des moyens pour détecter l'usure dudit filtre (12), où lesdits moyens de détection de l'usure dudit filtre (12) comprennent au moins des moyens pour mesurer la température de la pièce (8) dans laquelle le dispositif de filtrage (9) est positionné.

4. Procédé selon l'une des revendications 1 à 3, où ledit moyen pour mesurer la température de la pièce (8) est un capteur de température (8).

5. Procédé selon l'une des revendications 1 à 4, où lesdits moyens de détermination de l'usure dudit moyen de filtre (12) comprennent en outre des moyens destinés à compter le temps lié à la durée de vie résiduelle du filtre lui-même (12).

6. Procédé selon la revendication 5, où ledit moyen destiné à compter ledit temps comprend un microprocesseur (7).

7. Procédé selon la revendication 6, où lesdits moyens pour mesurer la température de la pièce (8) et ledit microprocesseur (7) sont intégrés dans un seul appareil (3).

8. Procédé selon l'une des revendications 3 à 7, où lesdits moyens pour mesurer la température de la pièce (8) sont logés dans un contenu (1) placé dans un couvercle (10) dudit réservoir supérieur (15) du dispositif de filtration (9).

9. Procédé selon l'une des revendications 3 à 8, où ledit dispositif de filtrage (9) est un pot.
